# EUROPÄISCHE PATENTSCHRIFT

(11) **EP 0 633 708 B1**
(45) Veröffentlichungstag und Bekanntmachung des Hinweises auf die Patenterteilung: **01.09.1999**
(21) Anmeldenummer: 94106914.8
(22) Anmeldetag: 03.05.1994
(51) Int. Cl.: H04Q 11/06, H04Q 1/24, H04M 3/24, H04J 3/14

(54) **Koppelnetz für eine digitale Zeitmultiplex Fernsprechvermittlungsstelle**
Switching network for a digital time division multiplex telephone exchange
Réseau de commutation pour un central téléphonique multiplex à division de temps numérique

(30) Priorität: 25.05.1993 DE 4317367
(43) Veröffentlichungstag der Anmeldung: 11.01.1995
(73) Patentinhaber: SIEMENS AKTIENGESELLSCHAFT, 80333 München (DE)
(72) Erfinder: Troost, Marcel-Abraham, Dipl.-Ing., D-81477 München (DE); Unterreitmayer, Jürgen, D-80333 München (DE)

(56) Entgegenhaltungen:
- EP-A- 0 590 182
- DE-A- 3 932 700
- FR-A- 2 491 712
- US-A- 4 064 369
- US-A- 4 821 256

## Beschreibung

Die Erfindung betrifft ein Koppelnetz für eine digitale Zeitmultiplex-Fernsprechvermittlungsstelle gemäß dem Oberbegriff des Patentanspruchs 1.

Solche Koppelnetze bestehen aus einer Reihe von Zeitkoppelstufeneinheiten, die der reinen Zeitkanalumsetzung jeweils von einer Zeitlage auf einer ankommenden angeschlossenen Zeitmultiplexleitung in eine Zeitlage auf der entsprechenden weiterführenden oder abgehenden angeschlossenen Zeitmultiplexleitung dienen oder Zeit-Raum-Koppeleinheiten, die neben der erwähnten Zeitlagenumsetzung auch eine räumliche Durchschaltung von einer angeschlossenen ankommenden Zeitmultiplexleitung auf eine weiterführende, abgehende Zeitmultiplexleitung bewirken. Sie umfassen ferner Raumkoppeleinheiten, die ohne Zeitlagenumsetzung eine räumliche Durchschaltung von ankommenden Zeitmultiplexleitungen zu abgehenden Zeitmultiplexleitungen bewirken.

Im Zusammenhang mit der Prüfung der Durchschaltung der Sprechwegeverbindungen innerhalb eines solchen Koppelnetzes wurde bisher so vorgegangen, daß jeweils über den betreffenden Sprechweg eine Verbindung zwischen einem externen Prüfmustergenerator und einem externen Prüfmusterempfänger hergestellt wurde und eine Überwachung auf den ordnungsgemäßen Empfang des erwarteten Prüfmusters erfolgte.

Ein Verfahren zur Durchschalteprüfung eines Koppelnetzes ist aus DE-A-3932700 bekannt.

Es ist auch schon ein Vorschlag zur Integration von Einrichtungen zur Durchführung von Sprechwegeprüfungen des Koppel netzes einer Zeitmultiplex-Fernsprechvermittlungsstelle gemacht wurden (Europäische Patentanmeldung 92 11 6653.4 veröffentlicht am 6.4.1994 unter der Nummer EP-A-590182), der darauf hinausläuft, wenigstens einzelne der Zeitkoppelstufeneinheiten oder kombinierten Zeit-Raum-Koppelstufeneinheiten des Koppelnetzes in einem Testmodus alternativ zu ihrer geschilderten Funktion im Vermittlungsbetrieb als Prüfmusterempfänger, als Prüfmustergenerator und als Kanalmonitor auszunutzen.

Einer der Vorteile einer solchen Integration von zur Sprechwegeprüfung erforderlichen Einrichtungen besteht in der Vereinfachung der Fehlerlokalisierung.

Da ein Koppelfeld der obengenannten Art außer den oben erwähnten Zeitkoppelstufeneinheiten bzw. kombinierten Zeit-Raum-Koppelstufeneinheiten und den Raumkoppelstufeneinheiten weitere im Sprechweg liegende und auch zwischen den durch die genannten Koppeleinheiten gebildeten Koppelstufen des Koppelnetzes liegende Einheiten umfaßt, z.B. Schnittstelleneinheiten und Taktanpassungsschaltungen, und da bei größeren Koppelnetzen die aus Raumkoppeleinheiten der genannten Art gebildeten Teile mehrstufig aufgebaut sind, besteht ein Interesse an einer weiteren Verbesserung der Fehlerlokalisierungsmöglichkeiten bei der Sprechwegedurchschaltung eines solchen Koppelnetzes.

Die Aufgabe der vorliegenden Erfindung besteht daher darin, ein Koppelnetz anzugeben, das eine solche verbesserte Fehlerlokalisierung ermöglicht.

Diese Aufgabe wird durch die Merkmale des Patentanspruchs 1 angegebenen Merkmale gelöst.

Beim erfindungsgemäßen Koppelnetz ist demnach wenigstens eine der Raumkoppelstufeneinheiten so ausgestattet, daß sie außer ihrer eigentlichen Koppelfunktion als Testmustergenerator wirken kann, wozu sie in näher bezeichneter Weise ausgestattet ist.

Es können hierdurch Fehler bei der Sprechwegedurchschaltung leichter lokalisiert werden.

Nachstehend wird die Erfindung anhand eines Ausführungsbeispiels unter Bezugnahme auf eine Zeichnung näher erläutert:

In der Zeichnung zeigen:

Figur 1 das Blockschaltbild eines Koppelnetzes derjenigen Art, von der die Erfindung ausgeht.

Figur 2 eine erfindungsgemäß ausgestaltete Raumkoppelstufeneinheit eines solchen Koppelnetzes in zum Verständnis der Erfindung erforderlichen Umfang.

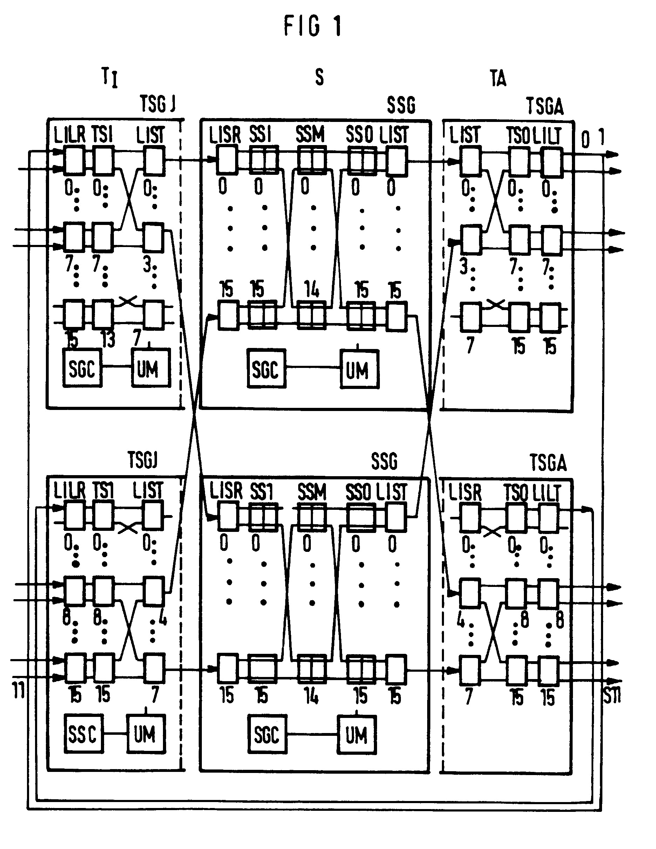

Die Figur 1 zeigt ein Koppelnetz aus einer eingangsseitigen und einer ausgangsseitigen Zeit-Raum-Koppelstufe TI bzw. TA und einen dazwischen angeordneten Raumkoppelteil S. Die eingangsseitigen und ausgangsseitigen Zeit-Raum Koppelstufen werden aus Koppelgruppen TSGI bzw. TSGA gebildet, der räumliche Teil S besteht aus Koppelgruppen SSG.

Die Koppelgruppen TSGI und TSGA enthalten jeweils eine Reihe der eingangs erwähnten Zeit-Raum-Koppelstufeneinheiten, die hier mit TSI bzw. TSO bezeichnet sind.

Der räumliche Teil S des Koppelnetzes ist im dargestellten Fall dreistufig ausgebildet, wobei die eingangsseitigen Raumkoppelstufen aus Raumkoppelstufeneinheiten SSI, die ausgangsseitigen Koppelstufen aus Raumkoppelstufeneinheiten SSO und die dazwischenliegenden Koppelstufen aus Raumkoppelstufeneinheiten SSM gebildet werden. Bei Koppelnetzen mit kleineren Anschlußzahlen ist der räumliche Teil nur einstufig ausgebildet.

Die Figur 1 zeigt ferner als Bestandteil der einzelnen Koppelgruppen Schnittstelleneinheiten LILR und LIST bzw. LIST und LILT, die eingangsseitig und ausgangsseitig der Zeit-Raum-Koppelstufeneinheiten TSI bzw. TSO, sowie Schnittstelleneinheiten LISR und LIST, die eingangsseitig der Raumkoppelstufeneinheiten SSI und ausgangsseitig der Raumkoppelstufeneinheiten SSO angeordnet sind.

Die vorerwähnten, weiteren Bestandteile des Koppelnetzes bildenden Taktanpassungsschaltungen sind hier nicht dargestellt.

Die Figur 1 stellt eine gestreckte Darstellung einer sogenannten gefalteten Koppelanordnung dar (auch Umkehrkoppelanordnung oder Umkehrgruppierung genannt), bei der sowohl die ankommenden als auch die abgehenden Zweige der angeschlossenen Zeitmultiplexleitungen an derselben Koppelfeldseite liegen.

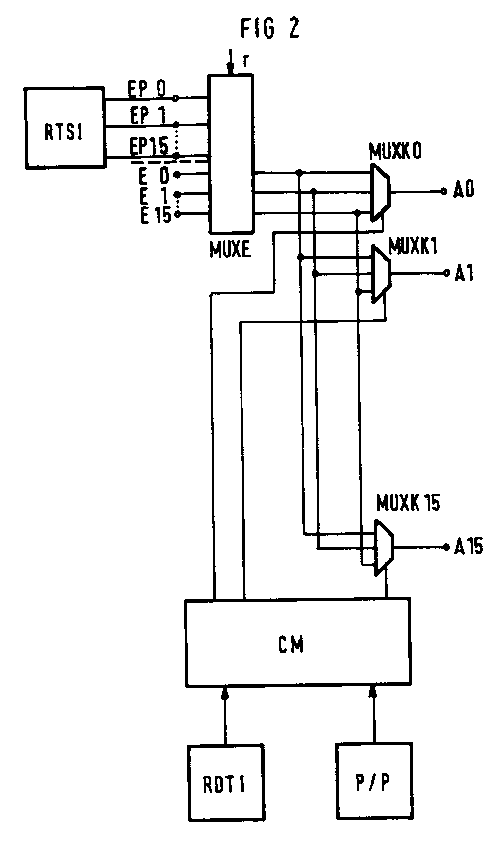

In der Figur 2 ist eine der mittleren Stufen des Raumkoppelteils S angehörende Raumkoppelstufeneinheit SSM des Koppelnetzes gemäß Figur 1 etwas mehr ins Einzelne gehend dargestellt. Eine solche Raumkoppelstufeneinheit dient dem Anschluß von 16 ankommenden und 16 abgehenden Zeitmultiplexleitungen.

Die eigentlichen Koppelelemente einer solchen Raumkoppelstufeneinheit sind 16 Multiplexer MUXK0 bis MUXK15, die jeweils 16 Eingänge und einen Ausgang aufweisen. Gleichgeordnete Eingänge dieser Multiplexer sind miteinander zur Bildung der erwähnten 16 Eingänge verbunden, die Ausgänge AO bis A15 der Multiplexer bilden die 16 Ausgänge der Raumkoppelstufeneinheit.

Die Multiplexer MUXK0 bis MUXK15 stehen unter dem Steuereinfluß eines Koppelspeichers CM, der in zyklischem Ablauf in den einzelnen Zeitfächern des Multiplexzyklus, dem der Betrieb der Raumkoppelstufeneinheit unterworfen ist, Ansteueradressen liefert, so daß zu jeder Zeitlage eine Durchschaltung von einem bestimmten der Eingänge über einen bestimmten der Multiplexer zu einem bestimmten der Ausgänge A0 bis A15 erfolgt.

Die Zufuhr der Fernsprechinformationen an die Multiplexer erfolgt dabei über einen weiteren Multiplexer MUXE, dessen Eingänge E0 bis E15 die eigentlichen Koppelfeldeingänge darstellen.

Der Multiplexer MUXE weist weitere 16 Eingänge EP0 bis EP15 auf, die mit den Ausgängen eines Testeingaberegisters RTSI verbunden sind.

Das Testeingaberegister enthält ein Prüfmuster, dessen einzelne Bitpositionen den Eingängen der Raumkoppelstufeneinheit zugeordnet sind. Aufgrund entsprechender Ansteuerung des Multiplexers MUXE durch ein Steuersignal r wird dieses Prüfmuster anstelle der den Eingängen E0 bis E15 zugeführten Fernmeldeinformationen statisch parallel an die Eingänge der Multiplexer MUXK0 bis MUXK15 angelegt.

Die Durchschaltung wenigstens eines Bits des Prüfmusters oder des gesamten Prüfmusters erfolgt im Zuge des Betriebs der Raumkoppelstufeneinheit als Testmustergenerator in der Weise, daß an bestimmten Ausgängen der Raumkoppestufeneinheit mindestens 8 Bittakte lang entsprechend der im Normalbetrieb seriellen Informationsdurchschaltung, d. h. auch während mindestens einer Zeitlage an bestimmten Raumkoppeleinheitenausgängen bestimmte Binärwerte auftreten. So kann beispielsweise das Auftreten des Binärwertes 0 an sämtlichen Ausgängen erzeugt werden, womit z. B. die Möglichkeit der Spikedetektion gegeben ist.

Es kann jedoch auch so vorgegangen werden, daß an Gruppen aufeinanderfolgender Ausgänge jeweils derselbe und von Gruppe zu Gruppe ein wechselnder Binärwert erzeugt wird und daß nach einer bestimmten Anzahl von Zeitlagen an sämtlichen Ausgängen ein Binärwertwechsel stattfindet.

Die entsprechenden Steuerinformationen werden hierzu von einem Dateneingaberegister RDTI aus in den Koppelspeicher CM eingeschrieben, anstelle von Einstelldaten für den Vermittlungsbetrieb, die von einem Register P/P aus übernommen werden.

Als Beispiel sei angenommen, daß im Testmusterregister RTSI ein 16 Bit umfassendes Testmuster steht, dessen niedrigstwertiges Bit den Binärwert 1 und dessen übrige Bits jeweils den Binärwert 0 aufweisen. Es sei ferner angenommen, daß von den Ausgängen AO bis A15 während der einzelnen Zeitlagen jeweils die Ausgänge AO bis A7 Bits des einen Binärwerts und die Ausgänge A8 bis A15 Bits des anderen Binärwerts liefern sollen, und daß ein Binärwertwechsel alle 64 Zeitlagen stattfinden soll.

Die Koppelinformationen, die zu diesem Zweck in den Koppelspeicher CM eingeschrieben werden, können derart sein, daß während der ersten 64 Zeitlagen des Multiplexzyklus jeweils der Binärwert 1 des niedrigstwertigen Bits des Prüfmusters an sämtliche der Ausgänge A0 bis A7 und der Binärwert 0 des nächsthöheren Bits des Bitmusters an sämtliche der Ausgänge A8 bis A15 durchgeschaltet wird. Die übrigen Bits des Prüfmusters bleiben bei diesem Beispiel unberücksichtigt. Während der darauffolgenden 64 Zeitlagen des mit 128 Zeitlagen angenommenen Zyklus sind die Durchschaltungen des niedrigstwertigen und des nächsthöherwertigen Bits des Prüfmusters vertauscht.

In den ersten 64 der den 128 Zeitlagen zugeordneten Speicherzeilen des Koppelspeichers CM und innerhalb derselben auf den den Multiplexern MUXK0 bis MUXK7 zugeordneten Speicherplätzen haben hierzu die Adressen desjenigen Raumkoppelstufeneinheitseingangs zu stehen, an dem das niedrigstwertige Bit des Prüfmusters anliegt, wogegen in den den Multiplexern MUXK8 bis MUXK15 zugeordneten Speicherzeilen die Adresse des Eingangs zu stehen hat, an dem das nächsthöhere Bit des Prüfmusters anliegt. In den der zweiten Hälfte der 128 Zeitlagen zugeordneten Speicherzeilen liegen die Verhältnisse gerade umgekehrt.

Es kann auch so vorgegangen werden, daß schon das Prüfmuster die gewünschte charakteristische Bitkombination, hier also 0000 0000 1111 1111 aufweist, und die Koppelinformationen so geartet sind, daß sämtliche Bits des Prüfmusters durchgeschaltet werden, also während der ersten 64 Zeitlagen die Bits 0 bis 7 an die Ausgänge A0 bis A7 und die Bits 8 bis 15 an die Ausgänge A8 bis A15 und während der zweiten 64 Zeitlagen umgekehrt.

Die Zeitlagengruppen können anstelle der angenommenen 64 Zeitlagen auch eine andere Anzahl von Zeitlagen umfassen.

## Patentansprüche

1. Koppelnetz für eine digitale Zeitmultiplex-Fernsprechvermittlungsstelle mit Zeitkoppelstufeneinheiten oder kombinierten Zeit-Raum-Koppelstufeneinheiten und reinen Raumkoppelstufeneinheiten,
**dadurch gekennzeichnet**,
daß wenigstens eine der jeweils mehrere Eingänge und Ausgänge aufweisenden Raumkoppelstufeneinheiten (z. B. SSM) so ausgestattet ist, daß sie alternativ und wahlweise zu ihrer Koppelfunktion für Fernsprechinformationen als Testmustergenerator zur Durchführung von Prüfungen von Teilen des Koppelnetzes ausgenutzt werden kann, wozu ihr ein Testeingaberegister (RTSI) zugeordnet ist, dessen Inhalt in Form eines Prüfmusters mit einzelnen oder allen Eingängen (E0 bis E15) der Raumkoppelstufeneinheit z. B. SSM zugeordneten Bitpositionen alternativ zu den durchzuschaltenden Fernsprechinformationen statisch an diese Eingänge anlegbar ist, und wozu in den der Ansteuerung der Raumkoppelstufeneinheit dienenden Koppelspeicher (CM) alternativ zu den dem Vermittlungsbetrieb dienenden Durchschalteadressen Ansteueradressen einschreibbar sind, die bei der Durchschaltung wenigstens eines Prüfmusterbits an die Ausgänge (A0 bis A15) der Raumkoppelstufeneinheit (SSM) die Abgabe von Bits eines bestimmten Binärwerts (0; 1) an bestimmten Ausgängen (z. B. A0 bis A7; A8 bis A15) der Raumkoppelstufeneinheit (SSM) festlegen.

2. Koppelnetz nach Anspruch 1,
**dadurch gekennzeichnet**,
daß im Testmustergeneratorbetrieb die Abgabe ein und desselben Binärwerts an sämtlichen Ausgängen der Raumkoppelstufeneinheit festgelegt wird.

3. Koppelnetz nach Anspruch 1,
**dadurch gekennzeichnet**,
daß im Testmustergeneratorbetrieb im Koppelspeicher (CM) nach Gruppen von Zeitlagen des dem Multiplexbetrieb der Raumkoppelstufeneinheit zugrunde liegenden Multiplexzyklus gesondert Gruppen von Ansteueradressen eingeschrieben sind, die bei der Durchschaltung des Prüfmusters an den Ausgängen der Raumkoppelstufeneinheit Gruppen aufeinanderfolgender, jeweils Bits desselben Binärwerts abgebender Ausgänge (A0 bis A7, A8 bis A15) festlegen, an denen bei einem Zeitlagengruppenwechsel jeweils ein Binärwertwechsel eintritt.

## Claims

1. Switching matrix for a digital time-division multiplex telephone exchange with time switching-stage units or combined time-space switching-stage units and pure space switching-stage units, characterized in that at least one of the space switching-stage units (e.g. SSM), each of which has a plurality of inputs and outputs, is equipped such that it can be used, as an alternative to and as an option in respect of its switching function, for telephone information, as a test pattern generator for carrying out tests on parts of the switching matrix, to which end it is allocated a test input register (RTSI) whose content, in the form of a test pattern with bit positions allocated to individual or all the inputs (E0 to E15) of the space switching-stage unit, e.g. SSM, can be applied to these inputs in the steady state as an alternative to the telephone information that is to be passed through, and to which end, as an alternative to the through-connection addresses used for switching operation, drive addresses can be written to the communications buffer (CM) used for driving the space switching-stage unit, the said drive addresses defining the output of bits having a specific binary value (0; 1) to specific outputs (e.g. A0 to A7; A8 to A15) of the space switching-stage unit (SSM) when at least one test pattern bit is passed through to the outputs (A0 to A15) of the space switching-stage unit (SSM).

2. Switching matrix according to Claim 1, characterized in that, in the test pattern generator mode, one and the same binary value is emitted at all the outputs of the space switching-stage unit.

3. Switching matrix according to Claim 1, characterized in that, in the test pattern generator mode, groups of drive addresses are written separately to the communications buffer (CM) using groups of time slots of the multiplex cycle on which multiplex operation of the space switching-stage unit is based, the said drive addresses defining, when the test pattern is passed through to the outputs of the space switching-stage unit, groups of successive outputs (A0 to A7, A8 to A15) which each emit bits having the same binary value and produce a respective change in the binary value when the time-slot group changes.

## Revendications

1. Réseau de connexion pour un central téléphonique numérique à multiplexage temporel comportant des unités d'étage de commutation temporelle ou des unités combinées d'étage de commutation temporelle-spatiale et des unités d'étage de commutation seulement spatiale,
caractérisé par le fait qu'au moins l'une des unités d'étage de commutation spatiale (par exemple SSM) comportant plusieurs entrées et sorties est équipée de telle sorte qu'elle peut être exploitée, facultativement et en variante à sa fonction de commutation pour des informations téléphoniques, comme générateur de modèles de test en vue de l'exécution de tests de parties du réseau de connexion, ce pour quoi lui est associé un registre d'entrée de test (RTSI) dont le contenu sous la forme d'un modèle de test avec des positions binaires associées à certaines ou à toutes les entrées (E0 à E15) de l'unité d'étage de commutation spatiale (par exemple SSM) peut être appliqué statiquement à ces entrées au lieu des informations téléphoniques à connecter, et ce pour quoi il peut être enregistré dans la mémoire de commutation (CM) servant à la commande de l'unité d'étage de commutation spatiale, au lieu des adresses de connexion servant au fonctionnement de commutation, des adresses de commande qui provoquent, lors de la connexion d'au moins un bit de modèle de test sur les sorties (A0 à A15) de l'unité d'étage de commutation spatiale (SSM), l'envoi de bits d'une certaine valeur binaire (0 ; 1) à certaines sorties (par exemple A0 à A7 ; A8 à A15) de l'unité d'étage de commutation spatiale (SSM).

2. Réseau de connexion selon la revendication 1,
caractérisé par le fait que, lors du fonctionnement comme générateur de modèles de test, on provoque l'envoi d'une seule et même valeur binaire à toutes les sorties de l'unité d'étage de commutation spatiale.

3. Réseau de connexion selon la revendication 1,
caractérisé par le fait que, lors du fonctionnement comme générateur de modèles de test, il est enregistré dans la mémoire de commutation (CM), selon des groupes de positions temporelles du cycle de multiplexage se trouvant à la base du fonctionnement de multiplexage de l'unité d'étage de commutation spatiale, des groupes d'adresses de commande, qui fixent, lors de la connexion du modèle de test sur les sorties de l'unité d'étage de commutation spatiale, des groupes de sorties successives (A0 à A7 ; A8 à A15) qui envoient respectivement des bits de même valeur binaire et auxquels apparaît un changement de valeur binaire à chaque changement de groupes de positions temporelles.
